(19) Europäisches Patentamt / European Patent Office / Office européen des brevets

(11) EP 2 963 080 B1

(12) EUROPEAN PATENT SPECIFICATION

(45) Date of publication and mention
of the grant of the patent:
**31.01.2018 Bulletin 2018/05**

(21) Application number: **13846256.9**

(22) Date of filing: **01.03.2013**

(51) Int Cl.:
*C08J 9/06* *(2006.01)* *C09J 7/02* *(0000.00)*

(86) International application number:
**PCT/JP2013/055668**

(87) International publication number:
**WO 2014/132439 (04.09.2014 Gazette 2014/36)**

(54) **POLYOLEFIN-TYPE RESIN FOAM**

POLYOLEFINHARZSCHAUM

MOUSSE DE RÉSINE DE TYPE POLYOLÉFINE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.01.2016 Bulletin 2016/01**

(73) Proprietor: **Furukawa Electric Co., Ltd.**
**Chiyoda-ku**
**Tokyo 100-8322 (JP)**

(72) Inventors:
• **KIM, Jae Kyung**
**Tokyo 100-8322 (JP)**

• **KAWANAKA, Hirofumi**
**Tokyo 100-8322 (JP)**

(74) Representative: **Forstmeyer, Dietmar et al**
**BOETERS & LIECK**
**Oberanger 32**
**80331 München (DE)**

(56) References cited:
**EP-A1- 2 330 147      JP-A- H0 275 642**
**JP-A- H03 269 029     JP-A- 2000 095 889**
**JP-A- 2002 356 574    JP-A- 2008 201 826**
**JP-A- 2011 052 044    JP-A- 2013 036 028**
**JP-A- 2013 053 233**

**Description**

TECHNICAL FIELD

The present invention relates to a non-halogen polyolefin-based resin foam.

BACKGROUND ART

As a sealing material in various fields such as construction, civil engineering, electricity, electronics and vehicles, a foam is currently widely used. Specific examples of such a foam provided for the sealing material include a polyolefin-based thermoplastic resin foam. This polyolefin-based resin foam is excellent in various characteristics such as productivity, lightweight properties, heat insulation, shock absorption, water resistance, chemical resistance and mechanical strength, and thus is suitably used in a wide range of fields such as a building material, an electric appliance, an automobile and energy equipment.

Meanwhile, a demand for safety has recently increased in various technical fields, and achievement of flame retardance that does not allow generation of toxic gas during combustion has been strongly required also for a sealing material used for the above-described industrial field. However, the polyolefin-based resin foam is highly combustible, and in order to improve this aspect, a proposal has been made for addition of a halogen-based flame retardant (see Patent Literature 1).

Further, in response to an increasing need for environment conservation in recent years, in view of complying with this request, material development for achieving non-halogen has been advanced for various materials. The approach has been made also to the above-described polyolefin-based resin foam, and a non-halogen foamed resin has been proposed (see Patent Literatures 2 to 5). Furthermore Patent Literature 6 discloses a cross-linked EPDM based foam, used as sealing material having at 50% a compression load value in the range of 1 to 20 KPa; Patent Literature 7 discloses a sealing material, which is a cured rubber foam obtained by cross-linking a copolymer rubber of ethylene and wherein the foam has a compression hardness in the thickness direction at 50% of 1.0 kPa or less.

CITATION LIST

PATENT LITERATURES

Patent Literature 1: JP-B-04-050936 ("JP-B" means examined Japanese patent publication)
Patent Literature 2: Japanese Patent No. 2628748
Patent Literature 3: JP-A-02-296841 ("JP-A" means unexamined published Japanese patent application)
Patent Literature 4: JP-A-08-193141
Patent Literature 5: JP-A-07-258447
Patent Literature 6: EP 2 330 147 A1
Patent Literature 7: JP 2013 036028 A

SUMMARY OF INVENTION

TECHNICAL PROBLEM

According to the techniques described in the above-described Patent Literatures 2 to 5, while providing a polyolefin-based resin foam with flame retardance, achievement of non-halogen has been made. However, the present inventors confirmed that addition of a flame retardant formed of metal oxide or hydroxide causes insufficient compression flexibility in sealing characteristics. Therefore, full response is difficult in a field and use in which both flame retardance and flexibility are required at a high level. The present inventors focused attention on an aspect in which achievement of both of the above-described required characteristics is desired. Moreover, the present inventors aimed not only at achieving non-halogen but also non-phosphorus without using any phosphorus compound or non-antimony without using any antimony compound.

Therefore, an object of the present invention is to provide a polyolefin-based resin foam that achieves both flame retardance and compression flexibility at a high level while satisfying a demand for achieving non-halogen (preferably, including non-phosphorus and non-antimony).

SOLUTION TO PROBLEM

The objects of the present invention have been achieved by the following means.

(1) A non-halogen flame retardant resin foam made by crosslinking and foaming a polyolefin-based resin composition, wherein the polyolefin-based foam has a 25% compression hardness in a thickness direction of 8 kPa or less as measured in accordance with JIS K6767, wherein the polyolefin-based resin composition contains a polyolefin-based resin, an organic filler and an inorganic filler, a total amount of compounding the organic filler and the inorganic filler being 100 to 200 parts by mass based on 100 parts by mass of the polyolefin-based resin, and wherein the polyolefin-based resin foam contains, based on 100 parts by mass of the polyolefin-based resin, 100 to 150 parts by mass of magnesium hydroxide and 10 to 50 parts by mass of titanium oxide as the inorganic filler, and containing 10 to 50 parts by mass of melamine cyanurate and 1 to 10 parts by mass of carbon black as the organic filler.

(2) The polyolefin-based resin foam described in the above item (1), which is also a non-phosphorus flame retardant resin foam containing no phosphorus compound.

(3) The polyolefin-based resin foam described in the above item (1) or (2), which is also a non-antimony flame retardant resin foam containing no antimony compound.

(4) The polyolefin-based resin foam described in any one of the above items (1) to (3), wherein 25% compression set as measured in accordance with JIS K6767 is 7 % or less.

Other and further features and advantages of the invention will appear more fully from the following description.

ADVANTAGEOUS EFFECTS OF INVENTION

The present invention can provide a polyolefin-based resin foam that achieves both flame retardance and compression flexibility at a high level while satisfying a demand for achieving non-halogen (preferably, including non-phosphorus and non-antimony).

DESCRIPTION OF EMBODIMENTS

With regard to a polyolefin-based resin foam according to the present invention (hereinafter, occasionally referred to simply as "foam"), a polyolefin-based resin composition be a base thereof contains a polyolefin-based resin, an organic filler and an inorganic filler in a specific amount, thereby allowing hitherto-difficult satisfaction of both flame retardance and compression flexibility. Hereinafter, the present invention is described in detail focusing on a preferred embodiment thereof.

[POLYOLEFIN-BASED RESIN]

Specific examples of a polyolefin-based resin forming a polyolefin-based resin foam according to the present invention include low density polyethylene, medium density polyethylene, high density polyethylene, linear low density polyethylene, linear ultra low density polyethylene, an ethylene-propylene block copolymer, an ethylene-propylene random copolymer, an ethylene-butene block copolymer, an ethylene-butene random copolymer, an ethylene-vinyl acetate copolymer, an ethylene-methyl methacrylate copolymer, ionomer-based resin in which molecules between ethylene-methacrylic acid copolymers are crosslinked by a metal ion, a propylene homopolymer, a propylene-ethylene random copolymer, a propylene-butene random copolymer, a propylene-ethylene block copolymer, a propylene-butene block copolymer, polybutene, polypentene, a propylene-ethylene-butene terpolymer, a propylene-acrylic acid copolymer and a propylene-maleic anhydride copolymer, and from a viewpoint of physical properties such as sealing properties of the foam, an ethylene-vinyl acetate copolymer having low crystallinity is preferred.

The above-described polyolefin-based resin may be used in combination with two or more kinds. Specific examples of a preferred combination include a combination of an ethylene-vinyl acetate copolymer and various kinds of polyethylene resins. In addition, when a plurality of polyolefin-based resins are used, unless otherwise noted, an amount of compounding any other agent is evaluated based on a total amount thereof as 100 parts by mass of the polyolefin resin.

Upon confirming the meaning of terms, a polyolefin-based resin refers to one formed of a polyolefin only, and may be formed of one kind of polyolefin, or a plurality of kinds of polyolefins. A polyolefin-based resin composition means a composition containing a component other than a polyolefin. In addition, the composition in the present invention refers to two or more predetermined components substantially uniformly existing at a specific formulation. Here, an expression "substantially uniformly" means that each component may be unevenly distributed in a range in which an operational advantage of the invention is developed. Moreover, the composition means one in any form without particular limitation, as long as the above-mentioned definition is fulfilled, including fluent fluid or paste, and also a solid and powder formed of a plurality of components. Further, the composition also means any material, including one that keeps a dispersion state for a predetermined period of time by stirring, even in a case where a precipitate exists.

When an ethylene-vinyl acetate-based polyolefin-based resin is adopted as the polyolefin-based resin in the present invention, the content (% by mass) of vinyl acetate [VA ratio] is not particularly limited, but is preferably 30 to 70%, and further preferably, 40 to 50%. The content is adjusted in this range of the VA ratio, thereby allowing obtaining of a foam having a further excellent compression flexibility, which is preferred.

A melt mass-flow rate (MFR) of the polyolefin resin is not particularly limited, but when an ethylene-vinyl acetate copolymer or polyethylene being a typical resin are taken as an example, MFR is preferably 1.0 to 15.0, and further preferably, 2.5 to 10.0.

A value of the melt mass-flow rate (MFR) is measured as described below (JIS K7210). A resin is melted at 190°C and extruded from an orifice by applying a load of 2.16 kgf, and a mass of the resin extruded in 10 minutes is measured.

In the polyolefin-based resin foam according to the present invention, a thermoplastic resin other than the polyolefin-based resin, may be contained within the range in which a desired effect is not adversely affected. Specific examples of the thermoplastic resin other than the polyolefin-based resin referred to herein include, as a halogen-free resin, polystyrene, an acrylate resin such as polymethyl methacrylate and a styrene-acrylic acid copolymer, a styrene butadiene copolymer, a triblock copolymer in which polystyrene and vinyl-polyisoprene are bonded, polyvinyl acetate, polyvinyl alcohol, polyvinyl acetal, polyvinylpyrrolidone, a petroleum resin, cellulose, a cellulose derivative such as cellulose acetate, cellulose nitrate, methylcellulose, hydroxymethylcellulose, hydroxymethylcellulose and hydroxypropylcellulose, a saturated alkyl polyester resin, an aromatic polyester resin such as polyethylene terephthalate, polybutylene terephthalate and polyarytate, a polyamide resin, a polyacetal resin, a polycarbonate resin, a polyester sulfone resin, a polyphenylene sulfide resin, a polyether ketone resin and a copolymer formed by copolymerizing a vinyl polymerizable monomer and a nitrogen-containing vinyl monomer. The thermoplastic resin other than the polyolefin-based resin may be contained in one kind or a plurality of kinds. A kind and an amount are selected according to desired physical properties. An amount of compounding the resin other than the polyolefin-based resin is not particularly limited, but is, based on the total amount of polyolefin-based resin, preferably 1 to 30% by mass, and further preferably, 5 to 10% by mass. In addition, when the polyolefin-based resin and the resin other than the polyolefin-based resin are used, unless otherwise noted, an amount of compounding any other agent is evaluated based on a total amount of 100 parts by mass of the polyolefin-based resin.

In the present invention, crystallinity of the polyolefin-based resin is preferably 10% or less, and further preferably, 5% or less. The crystallinity is adjusted in this range, thereby allowing obtaining of higher flexibility in the foam. A lower limit is not particularly limited, but practically exceeds 0%. In a case of a blended resin, the crystallinity may be in the range that does not exceed the above-described range. For example, in a case of a blend of a high crystallinity resin and a low crystallinity resin, the crystallinity of the polyolefin-based resin as a whole is preferably 10% or less, and further preferably, 5% or less. The lower limit is defined in a manner similar to the above-described limit.

In the present invention, unless otherwise noted, the crystallinity refers to a value measured and determined as described below.

The crystallinity according to the present invention is determined by a method of measurement applying wide-angle X-ray diffraction. As a measurement method, the crystallinity X is measured in the way that summation of areas of signals assigned to crystals is divided by summation of areas of signals assigned to the crystals and non-crystals, and a value expressed in terms of percentage is applied to the following equation:

$$X = \{Ic/(Ic+Ia)\} \times 100$$

Ic: crystalline scattering integrated intensity
Ia: non-crystalline scattering integrated intensity
X-ray source: Cu/K$\alpha$ ray (wavelength = 1.54056A)
tube voltage: 40kv
tube current: 40mA
measuring range: angle of diffraction 2θ=6~60°
scan speed: 10°/min

Moreover, in the case of the blended resin, the crystallinity of the blended resin can be determined from crystallinity and a compounding ratio of each resin. For example, when an ethylene-vinyl acetate copolymer (vinyl acetate content 46%, crystallinity 0%) and polyethylene (crystallinity 50%) are compounded at a ratio of 9:1, the crystallinity of the blended resin is 5.0%.

[FILLER]

In the present invention, an organic filler and an inorganic filler are simultaneously used as a flame retardant of the above-described foam, and with regard to the resin composition, a total amount of 100 to 200 parts by mass of the organic filler and the inorganic filler as the flame retardant is compounded based on 100 parts by mass of the base resin. When the amount of compounding the flame retardant is too small, an effect of improving flame retardance is small, and when the amount is too large, achievement of high flexibility becomes difficult. When the amount of compounding the flame retardant is adjusted within the above-described range, a foam having a comparatively good balance of flame retardance, compression hardness and compression set can be obtained. Therefore, the foam according to the present invention can also be referred to as a flame retardant resin foam. In a similar viewpoint, the amount of compounding the flame retardant is further preferably adjusted to 100 to 150 parts by mass.

(Inorganic filler)

In the present invention, the polyolefin-based resin foam contains, based on 100 parts by mass of the polyolefin-based resin, 100 to 150 parts by mass of magnesium hydroxide and 10 to 50 parts by mass of titanium oxide as inorganic fillers. The amount of the inorganic filler is, based on 100 parts by mass of the polyolefin resin, preferably 80 to 180 parts by mass, further preferably, 100 to 160 parts by mass, and particularly preferably, 120 to 140 parts by mass. This amount is adjusted to be the above-described lower limit or more, thereby allowing obtaining high flame retardance, which is preferred. On the other hand, the amount is adjusted to be the above-described upper limit or less, thereby allowing provision of excellent compression flexibility, which is preferred.

(Organic filler)

In the present invention, the polyolefin-based resin foam contains, based on 100 parts by mass of the polyolefin-based resin, 10 to 50 parts by mass of melamine cyanurate and 1 to 10 parts by mass of carbon black as organic fillers. Preferably the ratio of of compounding melamine cyanurate and carbon black is 1 : 0.1 to 1: 0.2 in melamine cyanurate : carbon black.

(Carbon black)

In the present invention, carbon black is contained as a filler, in addition to the inorganic filler and the organic filler. Carbon black is effective in allowing maintaining of foam flexibility without adversely affecting the flame retardance by the inorganic filler.
In addition, in the present invention, carbon black is included in the organic filler, for convenience. Therefore, "amount of compounding the organic filler" in the present invention also includes the amount of compounding carbon black.
As mentioned above, carbon black is effective in allowing maintaining of the foam flexibility without adversely affecting the flame retardance by the inorganic filler. However, use of an excessive amount may occasionally cause no sufficient progress of crosslinking of the polyolefin-based resin, and no obtaining of desired resin physical properties.

(Achievement of non-halogen)

In the non-halogen flame retardant resin foam according to the present invention, achievement of non-halogen without applying the following halogen flame retardant is made.
Specific examples of the halogen-based flame retardants include a brominated aliphatic or alicyclic hydrocarbon such as hexabromocyclododecane, a brominated aromatic compound such as hexabromobenzene, ethylenebispentabromodiphenyl and 2,3-dibromopropylpentabromophenyl ether, brominated bisphenols and a derivative thereof, such as tetrabromobisphenol A, tetrabromobisphenol A bis(2,3-dibromopropyl ether), tetrabromobisphenol A (2-bromoethyl ether), tetrabromobisphenol A diglycidyl ether and an addition product of tetrabromobisphenol A diglycidyl ether and tribromophenol, a brominated bisphenols derivative oligomer such as a tetrabromobisphenol A polycarbonate oligomer, an epoxy oligomer of an addition product of tetrabromobisphenol A diglycidyl ether and brominated bisphenol, a brominated aromatic compound such as tetrabromophthalate diol, tetrabromophthalate ester, tetrabromophthalate disodium, poly(pentabromobenzyl polyacrylate), pentabromophenol, bromophenoxyethanol, brominated phenol (novolak type), dibromocresylglycidyl ether, brominated aromatic triazine, vinyl bromide, tribromophenol, dibromophenol, dibromomethacresol, dibromoneopentylglycol, ethylenebistetrabromophthalimide, ethylenebisdibromonorbornane dicarboxyimide, bis(2,4,6-tribromophenoxy)ethane and a brominated acrylic resin, chlorinated paraffin, chlorinated naphthalene, perchloropentadecane, tetrachlorophthalic anhydride, a chlorinated aromatic compound, a chlorinated alicyclic compound, and a bromine-based flame retardant such as hexabromophenyl ether and decabromodiphenyl ether.

(Achievement of non-phosphorus)

In the non-halogen flame retardant resin foam according to the present invention, achievement of non-phosphorus without applying the following phosphorus-based flame retardant is preferably made.

The non-phosphorus flame retardant is not particularly limited, as long as a compound has a phosphorus atom in a molecule as the flame retardant. Specific examples thereof include phosphorus oxide such as red phosphorus, phosphorus trioxide, phosphorus tetroxide and phosphorus pentoxide, a phosphoric acid compound such as phosphoric acid, phosphorous acid, hypophosphorous acid, metaphosphoric acid, pyrophosphoric acid and polyphosphoric acid, ammonium phosphate such as monoammonium phosphate, diammonium phosphate and ammonium polyphosphate, melamine phosphate such as melamine monophosphate, melamine diphosphate and melamine polyphosphate, phosphates such as a phosphoric acid metal salt including lithium phosphate, sodium phosphate, potassium phosphate, calcium phosphate and magnesium phosphate, aliphatic phosphates such as trimethyl phosphate, triethyl phosphate, tributyl phosphate, tri(2-ethylhexyl) phosphate, tributoxyethyl phosphate, monoisodecylphosphate, 2-acryloyloxyethyl acid phosphate and 2-methacryloyloxyethyl acid phosphate, and aromatic phosphates such as triphenyl phosphate, tricresyl phosphate, trixylenyl phosphate, tris(isopropylphenyl)phosphate, tris(phenylphenyl)phosphate, trinaphthyl phosphate, cresyldiphenyl phosphate, xylenyldiphenyl phosphate, diphenyl (2-ethylhexyl)phosphate, di(isopropylphenyl)phenyl phosphate, diphenyl-2-acryloyloxyethyl phosphate and diphenyl-2-methacryloyloxyethyl phosphate.

(Achievement of non-antimony)

In the non-halogen flame retardant resin foam according to the present invention, achievement of non-antimony without applying the following antimony-based flame retardant auxiliary is preferably made.

Specific examples of such an antimony-based flame retardant auxiliary include an antimony oxide-based flame retardant auxiliary such as antimony trioxide, antimony tetroxide, antimony pentoxide and sodium antimonate.

[Specifications]

(compression hardness)

Then, 25% compression hardness of the above-described foam according to the present invention is 8 kPa or less, and preferably, 2 to 7.5 kPa in view of a sheet having excellent softness while having sufficient hardness. A foam having 25% compression hardness less than the above-described prescribed value is too soft to use in all likelihood as a sealing material, and a foam having compression hardness exceeding the prescribed value is too hard to use in all likelihood as the sealing material depending on use. In the present invention, unless otherwise noted, the 25% compression hardness refers to a value measured according to the method presented in the later-described Examples.

(Compression set)

The above-described foam according to the present invention preferably has a 25% compression set of 10% or less, further preferably, 7% or less, and still further preferably, 5% or less. When the 25% compression set exceeds the above-described prescribed value, resilience after compression is poor and the foam is difficult to return to an original state. Therefore, such a foam is unusable as the sealing material. In the present invention, unless otherwise noted, the compression set refers to a value measured according to the method presented in the later-described Examples.

(Open cell content)

An open cell content of the foam in the present invention is not particularly limited, but is preferably moderately adjusted for improving flexibility and surface followability. An open cell content of a crosslinked resin foam is preferably 50 to 100%, and further preferably, 80 to 95% in view of obtaining sufficient flexibility.

The open cell content of the polyolefin-based resin foam in the present invention refers to a value measured using Air Pycnometer 1000 (manufactured by Tokyoscience Co. Ltd.) according to the method described in ASTM D-2856-87, and specified by the following expression:

$$\text{Open cell content (\%)} = \text{(apparent volume} - \text{volume measured by air pycnometer)} / \text{apparent density} \times 100.$$

A method for communicating cells of the polyolefin-based resin foam is not particularly limited, but specific examples thereof include a method for communicating cells, upon heating under normal pressure to decompose a radical polymerization initiator and a foaming agent in simultaneous process, by a balance between resin strength due to crosslinking and internal pressure generated by foaming, a method for communicating cells by destroying a cell film by applying compression deformation, by constant-speed twin rolls, to a resin closed cell foam having closed cells, or a method for communicating cells by arranging constant-speed twin rolls on the surface of which countless small needles are provided, and opening countless small holes on the surface of the resin closed cell foam.

(Apparent density)

Apparent density of the polyolefin-based resin foam according to the present invention is not particularly limited, but is preferably 40 to 150 kg/cm$^3$, and further preferably, 80 to 120 kg/cm$^3$.
The apparent density is measured based on JIS K6767 (1999) "Cellular plastics-Polyethylene-Methods of test." For example, a foam is punched out to be a sample size of 15 cm$^3$ or more (for example, 10 cm $\times$ 10 cm), and thickness and mass are measured. A volume is calculated from an area (100 cm$^2$ in the case of 10 cm $\times$ 10 cm) and the thickness of the sample, and apparent density is calculated using the following expression:

$$\text{The apparent density (Kg/cm}^3\text{)} = \text{the mass of the sample (Kg)} / \{ \text{ the thickness of the sample (m)} \times \text{the area of the sample (m}^2\text{) } \}$$

[Manufacturing method]

In a material related to the method for manufacturing the polyolefin-based resin foam according to the present invention, a foaming agent, if desired, a foaming auxiliary, and if desired, a radical polymerization initiator are further compounded in addition to the above-described components upon manufacturing the foam.

(foaming agent)

The foaming agent only needs to have pyrolysis foaming properties for causing pyrolysis to generate gas during heating, and is not particularly limited, and an organic or inorganic chemical foaming agent can be used. Specific examples include an azo compound, such as azodicarbonamide, 2,2'-azobisisobutyronitrile, azohexahydrobenzonitrile and diazoaminobenzene; a sulfonyl hydrazide compound such as benzenesulfonyl hydrazide, benzene-1,3-sulfonyl hydrazide, diphenylsulfone-3,3'-disulfonyl hydrazide, diphenyloxide-4,4'-disulfonyl hydrazide, 4,4'-oxybis(benzenesulfonylhydrazide) and paratoluenesulfonyl hydrazide; a nitroso compound such as N,N'-dinitrosopentamethylenetetramine and N,N'-dinitroso-N,N'-dimethylphthalamide; an azide compound such as terephthalazide and p-t-butylbenzazide; and an inorganic compound such as sodium bicarbonate, ammonium bicarbonate, and ammonium carbonate, and at least one kind thereof is used. Among the compounds, azodicarbonamide and 4,4'-oxybis(benzenesulfonylhydrazide) are preferred because of efficiently yielding high expansion-ratio foam. An amount of compounding the foaming agent is appropriately selected in relation to an objective foam expansion ratio, but ordinarily preferably 10 to 40 parts by mass based on 100 parts by mass of the polyolefin resin.

(Radical polymerization initiator (may be occasionally referred to as a crosslinking agent in the present invention.))

A radical polymerization initiator is used when crosslinking the above-mentioned polyolefin resin by a radical polymerization initiator. The radical polymerization initiator is not particularly limited as long as the initiator generates a radical that initiates a crosslinking reaction of the above-mentioned polyolefin resin, but an organic peroxide that generates a radical according to a simple method such as a pyrolytic method is preferably used. As such an organic peroxide, for example, hydroperoxides, dialkyl peroxides or peroxy esters can be used, and above all, one in which a decomposition temperature giving a one-minute half-life exceeds 90°C is preferred. Here, a period of time in which, upon pyrolyzing the organic peroxide, an amount of remaining peroxide decreases to a half of an initial value is referred to as a half-life, and a one-minute half-life temperature means temperature at which the half-life becomes one minute. Specific examples of such an organic peroxide include dicumyl peroxide, t-butyl hydroperoxide, 1,3-bis(t-butylperoxyisopropyl)benzene, di-t-butylperoxide, 2,5-di-(t-butylperoxy)hexane, t-butylperoxybenzoate, 2,5-dimethyl-2,5-di-(t-butylperoxy)-3-hexyne, 2,5-dimethyl-2,5-di-(t-butylperoxy)hexane, di-t-butylperoxyphthalate, 1,1-di(t-hexylperoxy)-3,3,5-trimethylcyclohexane, t-butylperoxy-2-ethylhexyl monocarbonate, 2,5-dihydroperoxide, 3-di-t-butyl peroxide, t-dicumyl peroxide, di(2-t-butylperoxyisopropyl)benzene, n-butyl-4,4-bis(tert-butylperoxy)butane, 2,2-bis (tert-butylperoxy)butane, 1,1-bis(tert-butylperoxy)cyclohexane, t-butyl peroxybenzoate and benzoyl peroxide. From viewpoints of the expansion ratio and foam molding properties of the foam obtained, an amount of the crosslinking agent is, based on 100 parts by mass of the ethylene-vinyl acetate copolymer, preferably 0.3 to 2.0 parts by mass, and further preferably, 0.6 to 1.5 parts by mass.

Moreover, in addition to the above-described components, when necessary, various kinds of additives such as an antioxidant, an antistatic agent, an ultraviolet light inhibitor, a light stabilizer, a fluorescent whitening agent, a pigment, a dye, a compatibilizer, a lubricant, a crosslinking auxiliary, a foaming auxiliary, a plasticizer, a thickener and an viscosity reducer may be compounded to the resin composition according to the present invention.

In the present invention, among the above-mentioned methods, the methods for crosslinking and foaming the resin composition are classified into a method for allowing crosslinking substantially simultaneously with foaming, and a method for allowing crosslinking prior to foaming.

Hereinafter, the method for manufacturing the foam using each crosslinking method is specifically described.

(Method for crosslinking substantially simultaneously with foaming)

A resin composition prepared by further compounding a pyrolysis-type foaming agent and a radical polymerization initiator with the above-mentioned resin component and the flame retardant is kneaded with a kneader such as a pressure-type kneader or twin rolls at temperature (about 100 to 130°C) at which the radical polymerization initiator does not decompose, and the resultant kneaded product is pelletized. The pellets obtained are fed to an extruder and extrusion-molded at a resin temperature of about 100 to 130°C to form an unfoamed sheet having desired thickness and width. Alternatively, kneading is made as mentioned above, and then an unfoamed sheet is shaped by press molding or the like. The thus obtained unfoamed sheet is charged into heating adjusted to a temperature of about 180 to 230°C, and thus a foamed sheet is manufactured.

(Method for crosslinking a resin composition prior to foaming)

A resin composition prepared by further compounding a pyrolysis-type foaming agent, a silane compound such as vinyltrimethoxysilane and a radical polymerization initiator with the above-mentioned resin component and the flame retardant is kneaded, and the resulting kneaded product is pelletized. The pellets obtained are fed to an extruder together with a silanol condensation catalyst such as dibutyltin dilaurate and extrusion-molded to form an unfoamed sheet, and the silane compound is grafted to the resin component by action of the radical polymerization initiator in the unfoamed sheet. Subsequently, a grafted resin component is crosslinked by a condensation reaction in the presence of water. The sheet is charged into a heating furnace and a foamed sheet is manufactured. In this case, as the radical polymerization initiator, the above-described organic peroxide can be applied. A compounding amount thereof is preferably 0.003 to 2.0 parts by mass based on 100 parts by mass of the resin component. An amount of compounding the silanol condensation catalyst is preferably 0.03 to 5 parts by mass based on 100 parts by mass of the resin component.

(Method for crosslinking a resin composition prior to foaming)

A resin composition obtained by further compounding a pyrolysis-type foaming agent with the above-mentioned resin component and the flame retardant is kneaded, and the resultant kneaded product is pelletized. The pellets obtained are fed to an extruder and extrusion-molded to form an unfoamed sheet. The unfoamed sheet obtained is irradiated with ionizing radiation such as $\alpha$-, $\beta$- and $\gamma$-rays, electron beams and neutron beams to allow crosslinking. This sheet is charged into a heating furnace and a foamed sheet is manufactured.

The methods described above may be used alone, or in combination with two or more kinds of the methods.

According to the above-described manufacturing method related to a preferred embodiment of the present invention, the foam, for example, a foamed sheet can be produced very efficiently without needing a complicated process operation. Whereas, a sealing material using vulcanized rubber or the like is also available. However, when complication of a vulcanizing process therefor or the like is taken into consideration, the sealing material industrially includes many problems on manufacturing thereof, and improvement is desired also from a viewpoint of production cost. According to the polyolefin-based foam of the present invention, the problem related to such a rubber-based foamed sheet can be solved, and a desired foam can be provided inexpensively and with a high production efficiency.

In the above-described manufacturing method, a skin layer is ordinarily formed on a product surface after crosslinking and shaping. Specifically, a form obtained has a foamed part in the above-described range of compression hardness or permanent strain in a center, and a skin layer having larger compression hardness and permanent strain in comparison with the center. Commercialization of product may be made by removing or leaving the skin layer. The skin layer may be formed on one side. Properties of this skin layer are used to provide the skin layer with an adhesive or the like, and thus a product having morphological stability as an advantage may be produced. From such a viewpoint, the compression hardness of the skin layer is about 2 to 4 times the compression hardness of the central layer, for example. Moreover, the compression set of the skin layer is about 1.5 to 3.5 times the compression set of the central layer, for example. Thickness of the skin layer is not particularly limited, but is practically 0.5 to 1.0 mm.

[Use]

The polyolefin-based resin foam according to the present invention can be used in conformity with wide use in view of excellent flexibility and flame retardance thereof. Further, the polyolefin-based resin foam allows a compounding design as a product in which achievement of non-halogen, and also non-phosphorus and non-antimony is made. The polyolefin-based resin foam is also suitable for use in housing, a vehicle, and equipment and facilities that are used in everyday life, such as an electric product, and is suitably used as a sealing material for a gap or between connecting members thereof.

EXAMPLES

The present invention will be described in more detail based on examples given below.

([Examples 1)

A composition formed of, based on 100 parts by mass of an ethylene-vinyl acetate copolymer (EVA), 100 parts by mass of magnesium hydroxide, 15 parts by mass of titanium oxide, 10 parts by mass of melamine cyanurate, 1 part by mass of carbon black and 3 parts by mass of lubricant was mixed, by means of a kneader having twin rolls, with 1.2 parts by mass of crosslinking agent, 12 parts by mass of foaming agent and 2 parts by mass of foaming auxiliary, and kneaded at temperature at which the crosslinking agent, the foaming agent and the foaming auxiliary do not decompose (about 100 to 130°C), and the resultant kneaded product was heated under pressure by means of a press heated at 130°C to give an unfoamed sheet. Next, the unfoamed sheet was fed into a heating furnace adjusted at 220°C to give foamed sheet 101.
Hereinafter, foamed sheets 102 to 105 and C01 to C04 were obtained in a manner similar to the operations in manufacturing foamed sheet 101 except that a change was made to compounding described in Table 1.

| Item * | | 101 | 102 | 103 | 104 | 105 | C001 | C02 | C03 | C04 |
|---|---|---|---|---|---|---|---|---|---|---|
| EVA (VA=46%) | | 100 | 95 | 100 | 100 | 95 | 100 | 100 | 100 | 100 |
| Thermoplastic elastomer | | - | 5 | - | - | - | - | - | - | - |
| LDPE | | - | - | - | - | 5 | - | - | - | - |
| | Magnesium hydroxide | 100 | 120 | 120 | 150 | 120 | 60 | 200 | 100 | - |
| | Titanium oxide | 15 | 20 | 20 | 10 | 20 | 15 | 10 | 15 | - |
| Total amount of inorganic filler | | 115 | 140 | 140 | 160 | 140 | 75 | 210 | 115 | 0 |
| | Melamine cyanurate | 10 | 15 | 15 | 10 | 15 | 10 | 5 | - | 110 |
| | Carbon black | 1 | 3 | 3 | 3 | 3 | 1 | 1 | - | 1 |
| Total amount of organic filler | | 11 | 18 | 18 | 13 | 18 | 11 | 6 | 0 | 111 |
| Total amount of filler | | 126 | 158 | 158 | 173 | 158 | 86 | 216 | 115 | 111 |
| Lubricant | | 3 | 3 | 3 | 3 | 3 | 3 | 3 | 3 | 3 |
| Crosslinking agent | | 1.2 | 1.2 | 1.2 | 1.2 | 1.2 | 1.2 | 1.2 | 1.2 | 1.2 |
| Foaming agent | | 12 | 12 | 12 | 12 | 12 | 12 | 12 | 12 | 12 |
| Foaming auxiliary | | 2 | 2 | 2 | 2 | 2 | 2 | 2 | 2 | 2 |
| Flame retardance | UL94 Vertical Burn test | V-0 | V-0 | V-0 | V-0 | V-0 | Not passed | V-0 | Not passed | Not passed |
| | UL94 Horizontal Burn test | HF-1 | HF-1 | HF-1 | HF-1 | HF-1 | Not passed | HF-1 | Not passed | Not passed |
| Compression hardness (kPa) | | 4.5 | 7.0 | 5.2 | 5.4 | 4.3 | 2.7 | 9.2 | 3.2 | 1.7 |
| Compression set (%) | | 2.9 | 4.2 | 3.1 | 2.9 | 3.6 | 7.5 | 2.4 | 4.5 | 1.0 |
| Apparent density (kg/m$^3$) | | 94.79 | 103.46 | 109.32 | 119.98 | 105.12 | 75.42 | 140.38 | 87.31 | 89.00 |
| Open cell content (%) | | 89.3 | 81.2 | 86.4 | 83.2 | 85.5 | 87.4 | 80.1 | 86.2 | 94.8 |

\* The numerical values about the composition ratio in the Table 1 mean parts by weight.

The detail of the each component of the resin composition shown in the above table is as follows.

<Resin component>

EVA (ethylene vinyl acetate copolymer)

vinyl acetate content (VA ratio) 46%
MFR 2.5 g/10min
EVAFLEX EV45LX (trade name), manufactured by DU PONT-MITSUI POLYCHEMICAL Co., LTD.

EVA (ethylene vinyl acetate copolymer)

vinyl acetate content (VA ratio) 19%
MFR 2.5 g/10min
EV460 (trade name), manufactured by DU PONT-MITSUI POLYCHEMICAL Co., LTD.

LOW DENSITY POLYETHYLENE (LDPE)

MFR 7.0 g/10min
SUMIKATHENE L705 (trade name), manufactured by SUMITOMO CHEMICAL Co., LTD.

LINEAR LOW DENSITY POLYETHYLENE (LLDPE)

MFR 3.0 g/10min
SUMIKATHENE-L (trade name), manufactured by SUMITOMO CHEMICAL Co., LTD.

THERMOPLASTIC ELASTOMER

Tri-block copolymer in which polystyrene and vinyl-polyisoprene are bonded styrene content 20%, MFR 5.0 g/10min
HYBRAR 5127 (trade name), manufactured by KURARAY Co., LTD.

<Flame retardant>

MAGNESIUM HYDROXIDE

KISUMA 5B (trade name), manufactured by KYOWA CHEMICAL Co., LTD.

ALUMINUM HYDROXIDE

HIGILITE H42S (trade name), manufactured by SHOWA DENKO K.K.

TITANIUM OXIDE

Ti-Pure R-103 (trade name), manufactured by DU PONT

MELAMINE CYANURATE

MC-2010N (trade name), manufactured by SAKAI CHEMICAL INDYSTRY Co., LTD.

CARBON BLACK

ASAHI #70 (trade name), manufactured by ASAHI CARBON BLACK Co., LTD.

AMMONIUM POLYPHOSPHATE

Exolit AP423 (trade name), manufactured by Clariant Japan K.K.

<(Thermally decomposable) foaming agent>

Foaming agent: azodicarbonamide

AC#1L (trade name), manufactured by EIWA CHEMICAL Co., LTD.

Foaming auxiliary: ZINIC OXIDE

ZINC WHITE No. 1 (trade name), manufactured by HAKUSUI TECH. Co., LTD.

<Crosslinking agent>

dicumyl peroxide "PERCUMYL D" (trade name), manufactured by Nippon Oil & Fats Co., LTD.

<Lubricant>

STEARYLAMIDE
FATTY ACID AMIDE-S (trade name), manufactured by KAO CORPORATION
Physical properties were evaluated according to the methods described below.

(Method for measuring foam compression hardness)

With regard to a method for measuring 25% compression hardness, measurement was carried out in accordance with JIS K6767 "Cellular plastics-Polyethylene-Methods of test." Specifically, foams from which a skin (skin layer) was removed were stacked to be 25 mm or more in total thickness, and resistance force at compression by 25% of the total thickness was measured.

(Method for measuring foam compression set)

A value measured in accordance with JIS K6767 was described. More specifically, a plurality of $50 \times 50$ mm specimens were cut out from a foam, and foams from which a skin (skin layer) was removed were stacked to be 25 mm or more in total thickness, and thickness at stacking was accurately measured as "initial thickness." Next, the specimen was compressed by 25% of the "initial thickness" and fixed and allowed to stand continuously for 22 hours. Then, the specimen was removed and allowed to stand for 24 hours, and then calculation was made using the following expression:

Compression set (%) = {specimen initial thickness (mm) – specimen thickness (mm) after testing} / specimen initial thickness (mm) × 100.

(Evaluation of flame retardance)

(1) UL94 Vertical Burn test

A burn test was conducted in accordance with the UL94 vertical burn test standard. Each foam was cut out in a dimension of $125 \pm 5$ mm in length and $13.0 \pm 0.5$ mm in width, and five specimens were prepared for each foam. Each specimen was vertically supported, and a burner flame was applied to a bottom end of the specimen and kept for 10 seconds (first burner flame application), and then the burner flame was removed from the specimen. Then, immediately upon stopping flaming, the burner flame was reapplied for another 10 seconds (second burner flame application), and removed. Judgment was made for the specimen to be rated as any one of V-0, V-1 and V-2.

(i) One in which the total duration of flaming combustion after the first burner flame application and the second burner flame application for five specimens is 50 seconds or less, and the total duration of flaming combustion and non- flaming combustion after the second burner flame application is 30 seconds or less is rated to be V-0.
(ii) One in which the total duration of flaming combustion after the first burner flame application and the second burner flame application for five specimens is 250 seconds or less, and the total duration of flaming combustion and non-flaming combustion after the second burner flame application is 60 seconds or less is rated to be V-1 or V-2. One without generating flaming drips was rated to be V-1 and one generating flaming drips was rated to be V-2.

In the above-described vertical burn test, one rated to be V-2 or higher can satisfy a market demand, and one rated to be V-0 can receive very high market evaluation.

(2) UL94 Horizontal Burn test

A burn test was conducted in accordance with the UL94 horizontal burn test standard. A specimen (length: 150 ± 1 mm, width: 50 ± 1 mm) of each foam was horizontally supported, a 38 mm-flame was applied for 60 seconds, and a burning rate and burning behavior in 100 mm between marks were evaluated, and thus the specimen passed the horizontal burn test specified in HF-1.

One rated to be HF-1 in the above-described vertical burn test can satisfy a market demand.

In addition, one that is not rated to be any one of V-0, V-1, V-2 or HF-1 in the above-described UL94 flame retardance test is regarded to be not passed.

(Preparation of a foam specimen)

A rectangular parallelepiped foam material having skins (skin layers) on both sides was prepared, and the skin thereof was cut off using a slicer. A foam specimen including no skin was used for each measurement test described above.

The foams in Examples had moderate compression flexibility in view of the compression hardness of 8 kMPa or less, and achieved a V-0 level in the UL94 vertical burn test even without use of a halogen-based flame retardant, a phosphorus-based flame retardant and a antimony-based flame retardant. On the other hand, in Comparative Example C01, the amount of compounding the flame retardant was too small, and therefore the compression hardness was in a suitable range and the compression set used as an index of compression resilience had a comparatively large value. However, the foam did not pass the horizontal and vertical burn tests. In Comparative Example C02, the amount of compounding the flame retardant was too large, and the compression hardness became too large, and obtaining of satisfactory compression flexibility was not allowed. In the foams in Comparative Examples C03 and C04, a combination of flame retardants being an organic filler and an inorganic filler was unsuitable, and therefore the foams were poor in at least one of the flame retardance, the compression hardness and the compression resilience.

(Comparative Example C05)

With referring to the above-described Patent Literature 4 (JP-A-H08-193141), the following component composition was formulated, and a foam was prepared in a manner similar to the operations in the above-described Example. The results show that the foam did not pass the flame retardance and was very high in the compression hardness, and thus the foam was significantly inferior to ones in Examples.

| Component | Composition ratio (parts by weight) |
| --- | --- |
| EVA (VA=19%) | 80 |
| LLDPE | 10 |
| LDPE | 10 |
| Ammonium polyphosphate | 50 |
| Melamine cyanurate | 10 |
| Titanium oxide | 2 |
| Zinic oxide | 2 |
| Aluminum hydroxide | 36 |
| Lubricant | 3 |
| Crosslinking agent | 1.2 |
| Foaming agent | 12 |

Having described our invention as related to the present embodiments, it is our intention that the invention not be limited by any of the details of the description, unless otherwise specified, but rather be construed broadly within its spirit and scope as set out in the accompanying claims.

**Claims**

1. A non-halogen flame retardant resin foam made by crosslinking and foaming a polyolefin-based resin composition, wherein the polyolefin-based resin foam has a 25% compression hardness in a thickness direction of 8 kPa or less as measured in accordance with JIS K6767,
wherein the polyolefin-based resin composition contains a polyolefin-based resin, an organic filler and an inorganic filler, a total amount of compounding the organic filler and the inorganic filler being 100 to 200 parts by mass based on 100 parts by mass of the polyolefin-based resin, and
wherein the polyolefin-based resin foam contains, based on 100 parts by mass of the polyolefin-based resin, 100 to 150 parts by mass of magnesium hydroxide and 10 to 50 parts by mass of titanium oxide as the inorganic filler, and 10 to 50 parts by mass of melamine cyanurate and 1 to 10 parts by mass of carbon black as the organic filler.

2. The polyolefin-based resin foam according to Claim 1, which is also a non-phosphorus flame retardant resin foam containing no phosphorus compound.

3. The polyolefin-based resin foam according to Claim 1 or 2, which is also a non-antimony flame retardant resin foam containing no antimony compound.

4. The polyolefin-based resin foam according to any one of Claims 1 to 3, wherein 25% compression set as measured in accordance with JIS K6767 is 7 % or less.


**Patentansprüche**

1. Halogenfreier flammhemmender Harzschaum, hergestellt durch Vernetzen und Aufschäumen einer Harzzusammensetzung auf Polyolefinbasis,
wobei der Harzschaum auf Polyolefinbasis eine Stauchhärte von 25% in einer Dickenrichtung von 8 kPa oder weniger aufweist, gemessen gemäß JIS K6767,
wobei die Harzzusammensetzung auf Polyolefinbasis ein Harz auf Polyolefinbasis, einen organischen Füllstoff und einen anorganischen Füllstoff enthält, wobei die Gesamtmenge der Zusammensetzung des organischen Füllstoffs und des anorganischen Füllstoffs 100 bis 200 Massenteile bezogen auf 100 Massenteile des Harzes auf Polyolefinbasis beträgt und
wobei der Harzschaum auf Polyolefinbasis, bezogen auf 100 Massenteile des Harzes auf Polyolefinbasis, 100 bis 150 Massenteile Magnesiumhydroxid und 10 bis 50 Massenteile Titanoxid als anorganischen Füllstoff und 10 bis 50 Masseteile Melamincyanurat und 1 bis 10 Masseteile Ruß als organischen Füllstoff, enthält.

2. Harzschaum auf Polyolefinbasis nach Anspruch 1, der auch ein phosphorfreier flammhemmender Harzschaum ist, der keine Phosphorverbindung enthält.

3. Harzschaumstoff auf Polyolefinbasis nach Anspruch 1 oder 2, der auch ein antimonfreier flammhemmender Harzschaum ist, der keine Antimonverbindung enthält.

4. Harzschaum auf Polyolefinbasis nach einem der Ansprüche 1 bis 3, wobei der Druckverformungsrest von 25%, gemessen gemäß JIS K6767, 7% oder weniger beträgt.


**Revendications**

1. Mousse de résine ignifugeante non halogénée produite par réticulation et moussage d'une composition de résine à base de polyoléfine,
dans laquelle la mousse de résine à base de polyoléfine a une dureté en compression à 25 % dans le sens de l'épaisseur, telle que mesurée conformément à la norme JIS K6767, de 8 kPa ou moins,
dans laquelle la composition de résine à base de polyoléfine contient une résine à base de polyoléfine, une charge organique et une charge inorganique, la quantité totale combinée de la charge organique et de la charge inorganique étant de 100 à 200 parties en masse pour 100 parties en masse de la résine à base de polyoléfine, et
dans laquelle la mousse de résine à base de polyoléfine contient, pour 100 parties en masse de la résine à base de polyoléfine, 100 à 150 parties en masse d'hydroxyde de magnésium et 10 à 50 parties en masse d'oxyde de titane servant de charge inorganique, et 10 à 50 parties en masse de cyanurate de mélamine et de 1 à 10 parties en masse de noir de carbone servant de charge organique.

2. Mousse de résine à base de polyoléfine selon la revendication 1, qui est aussi une mousse de résine ignifugeante sans phosphore ne contenant pas de composé du phosphore.

3. Mousse de résine à base de polyoléfine selon la revendication 1 ou 2, qui est aussi une mousse de résine ignifugeante sans antimoine ne contenant pas de composé de l'antimoine.

4. Mousse de résine à base de polyoléfine selon l'une quelconque des revendications 1 à 3, dans laquelle la déformation rémanente après compression à 25 %, telle que mesurée conformément à la norme JIS K6767, est de 7 % ou moins.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4050936 B
- JP 2628748 B
- JP 2296841 A
- JP 8193141 A
- JP 7258447 A
- EP 2330147 A1
- JP 2013036028 A